# EUROPEAN PATENT APPLICATION

(11) **EP 4 752 710 A1**
(43) Date of publication of application: **03.06.2026**
(21) Application number: 25219539.1
(22) Date of filing: 28.11.2025
(51) Int. Cl.: G06F 9/30

(54) **METHOD FOR IMPLEMENTING AN INSTRUCTION SET ARCHITECTURE FOR A CENTRAL PROCESSING UNIT, INSTRUCTIONS FORMAT FOR THE CENTRAL PROCESSING UNIT AND RELATED CENTRAL PROCESSING UNIT**

(30) Priority: 02.12.2024 IT 202400027174
(71) Applicant: Arox S.r.l., 55049 Viareggio (LU) (IT)
(72) Inventor: TOSCHI, Davide, 20100 MILANO (IT); SPEZIALI, Marco, 20100 MILANO (IT); TERLIZZI, Leonardo, 20100 MILANO (IT)
(74) Representative: Bellomia, Paolo

(57) **Abstract**

It is disclosed a method for implementing an Instruction Set Architecture (I) for a Central Processing Unit (50). The method comprises the step a) of providing a plurality of instructions (RR, RI, RRc, J, JR, B, MV, WFI, BKPT, LI, L/LB/S/SB, CA, PP) to be executed by the Central Processing Unit, each instruction comprising at least sixteen bits, comprises the step b) of arranging at least part of said plurality of instructions into a plurality of instructions formats (RR/RI; J/JR/MV/WFI/BKPT/LI; LB/PP; RRc/L), wherein the number of the plurality of instructions formats is less than the number of the plurality of instructions, and comprises the step c) of assigning, in the plurality of instructions formats, a corresponding value of a first field composed of three bits (#7, #6, #5), selected from the at least sixteen bits, for identifying a respective instruction format (RR; J/JR/MV/WFI/BKPT/LI; LB/PP; RRc/L) out of said plurality of instructions formats.

## Description

### Technical field

The present invention generally relates to the electronics field.

In particular, the present invention concerns a method for implementing an instruction set architecture for a Central Processing Unit, the instructions format for the Central Processing Unit and related Central Processing Unit.

### Prior art

It is known that an Instruction Set Architecture (ISA) is an abstract model that defines the language by which software interacts with the Central Processing Unit (CPU) of an electronic system, such as a fixed or portable computer.

The Instruction Set Architecture defines the instructions supported, the data types and the registers.

Known examples of Instruction Set Architecture are Intel's 8086 family (80186, 80286, 80386, 80486) for computers and ARM for smartphones and tablets.

The various Instruction Set Architectures are commonly classified according to their complexity into two categories:
- "Complex instruction set computer" (abbreviated CISC): comprises a multitude of instructions of high computational complexity, some of which are rarely used. The above-mentioned instructions are typically executed in two or more clock cycles of the processor;
- "Reduced instruction set computer" (abbreviated RISC): comprises a subset of the instructions, that is, those that have less computational complexity.

The above-mentioned instructions are typically executed in a single clock cycle.

Examples of CISC architectures are the 8086 family, while examples of RISC architectures are Thumb, AVR32, RISC-V, and Hitachi SuperH.

It is also known that an instruction specifies the operating code that represents the type of instruction to be executed (for example, writing to a register, arithmetic or logic operations of values in the registers, jumping to another address of the program) and the operands used (registers, literal or constant values, memory access addresses).

A microarchitecture is instaed a circuit realization that is based on a particular Instruction Set Architecture.

Nowadays it is important to reduce the power consumption of a processor, in particular to increase the battery life of portable electronic devices (smartphones, tablets) on which the battery is mounted.

One possibility for reducing energy consumption is to choose an appropriate Instruction Set Architecture that allows a fast decoding of the instructions at the hardware level.

The Applicant has noted that the known solutions of Instruction Set Architecture do not allow a decoding of the instructions with a sufficiently reduced time, while maintaining high performance and compact dimensions of the object code of the software program.

### Summary of the invention

The present invention relates to a method for implementing an Instruction Set Architecture for a Central Processing Unit as defined in the appended claim 1 and its preferred embodiments described in the dependent claims from 2 to 4.

The Applicant has noted that the implementation method according to the present invention can significantly reduce the time taken at hardware level to decode the format of an instruction, thus allowing most of the instructions to be executed in a single clock cycle of the processor, thereby significantly reducing the electrical power consumption of the processor using the Instruction Set Architecture according to the invention and reducing the area occupied by the processor executing instructions encoded according to the Instruction Set Architecture according to the invention, while maintaining high performance and compact dimensions of the object code of the software program implemented with the instructions encoded with the Instruction Set Architecture according to the invention.

It is also an object of the present invention an instructions format for a Central Processing Unit as defined in the appended claim 5 and in the preferred embodiments described in the dependent claims from 6 to 9.

It is also an object of the present invention a Central Processing Unit as defined in the appended claim 10.

### Brief description of the drawings

Further characteristic features and advantages of the invention are given in the following description of a preferred embodiment and of its variants provided by way of example with reference to the accompanying drawings, in which:
- Figure 1 shows an Instruction Set Architecture according to the invention;
- Figure 2 shows the encoding of an operating code of two instructions according to the Instruction Set Architecture of Figure 1;
- Figure 3 shows a block diagram of a possible embodiment of a Central Processing

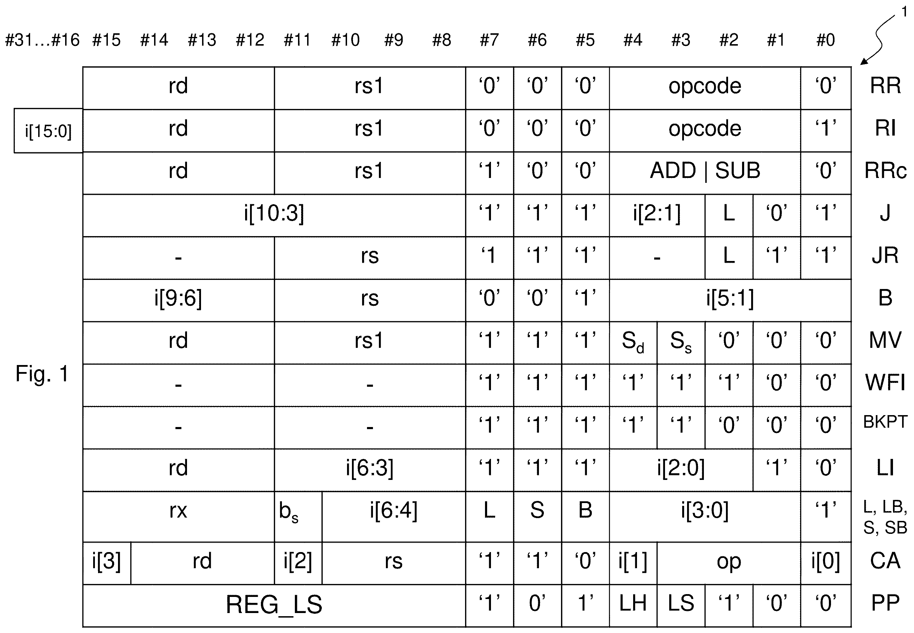

Unit executing instructions having the format of Figure 1.

### Detailed description of the invention

It should be noted that in the following description blocks, components or modules which are identical or similar are indicated in the drawings with the same reference numerals, even if they are shown in different embodiments of the invention.

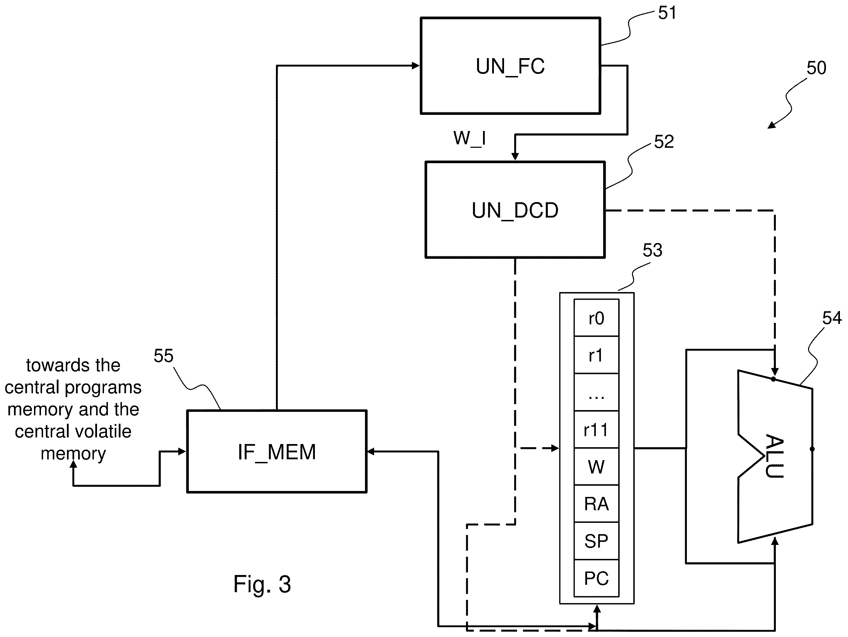

The Central Processing Unit (CPU) 50 shown in Figure 3 executes a sequence of instructions that are stored in a central programs memory that is, for example, external to the Central Processing Unit 50.

The Central Processing Unit 50 comprises an Arithmetic Logic Unit (ALU) 54, a Fetch Unit 51, a decoding Unit 52 connected to the Fetch Unit 51 and to the Arithmetic Logic Unit 54, an internal register bank 53 connected to the Arithmetic Logic Unit 54 and to the Decoding Unit 52, as will be explained in more detail below.

The internal register bank 53 comprises a plurality of registers, each composed of 16 bits indicated below as follows:
- r0: it contains the value 0, that is, 16 bits each having the value '0';
- r1, r2, r3, r4: they contain the values used in input or generated in output by the functions executed by the Central Processing Unit, according to the instructions of the software program stored in the central program memory;
- W: implicit register, it is always the second operand of an arithmetic or logic operation;
- r5, r6, r7, r8, r9, r10, r11: these are general purpose registers;
- SP (stack pointer): this is a register that contains the address of the memory location occupied by the top of a stacked memory, a data structure used mainly to handle function calls, saving contexts and local variables;
   - RA (return address): this is a register used to store the return address when executing functions or subroutines.
   - PC (program counter): this is a register that contains the address of the subsequent instruction to be executed in the central programs memory.

The internal registers are used to temporarily store intermediate values, operands and addresses, thereby reducing dependence on the external central program memory and improving the overall performance of the Central Processing Unit 50.

The Central Processing Unit 50 further comprises 6 special 16-bit interrupt registers, having the function of enabling and selecting interrupt priority levels useful for exchanging information with external hardware peripherals.

The Arithmetic Logic Unit 54 comprises a plurality of logic ports that receive input data stored in at least part of the plurality of registers and at least one control signal generated by the Decoding Unit 52. These logic ports execute appropriate logic and arithmetic operations in order to execute the object code of a software program, generating as output processed data. This data is temporarily stored in a part of the plurality of internal registers indicated above or in a central volatile memory external to the Central Processing Unit 50.

Each instruction is executed cyclically in 4 steps:
- a first fetch step, in which the Fetch Unit 51 of the Central Processing Unit 50 reads in the central program memory the value at the address contained in the Program Counter register PC;
- a second decoding step, in which the Decoding Unit 52 of the Central Processing Unit 50 decodes the current instruction, then sends data to the Arithmetic Logic Unit 54 and the register bank 53;
- a third execution step, in which the Arithmetic Logic Unit 54 performs the arithmetic operation (for example, addition or subtraction) or the logic operation (for example, AND, OR, NOT) indicated by the decoded instruction;
- a fourth step of access to the external central memories, in which the Arithmetic Logic Unit 54 performs a reading of a data item from the central volatile memory or from the central program memory, or performs a writing of a data item in the central volatile memory.

Note that the fourth step is only performed for particular types of instructions, so most instructions are performed cyclically in 3 steps.

Figure 1 shows the instructions format 1 according to the invention, which is also referred to as Instruction Set Architecture (hereinafter abbreviated to ISA).

The instructions format 1 represents a set of instructions used to generate (by means of a compiler) the machine language code (that is, the object code) from a software program written in a particular programming language, wherein said machine language represents the instructions executed by a Central Processing Unit of an electronic processor.

Each instruction contains information that enables identification of the type and the format among a plurality of instructions formats (in particular, 8 possible instructions formats among 13 total instructions), identification of the destination register *rd* in which to save the processed data and identification of one or more operands used by the considered instruction which can be:
- values read from the registers r0, r1...r11, W, RA, SP, PC;
- constant values (commonly referred to as "immediate").

It can be seen that instructions format 1 represents thirteen possible instructions:
- first line, instruction RR ("register-to-register operation"): it is an instruction that performs an arithmetic or logic operation that uses one of the possible registers r0, r1...r11, RA, SP indicated by the source field *rs1* and uses the implicit register W, performing an arithmetic or logic operation that takes as input the value of the register indicated by the source field *rs1* and the value of the implicit register W and copies the result of the operation to one of the possible registers r0, r1...r11, W, RA, SP indicated by the destination field *rd*;
- second line, instruction RI ("register-to-immediate operation"): it is an instruction that performs an arithmetic operation that uses one of the possible registers r0, r1...r11, W, RA, SP indicated by the source field *rs1* and uses a constant value ("immediate") with 16-bits contained in the central program memory, performing an arithmetic or logic operation that takes as input the value of the register indicated by the source field *rs1* and the constant value and saves the result of the operation in one of the possible registers r0, r1...r11, W, RA, SP indicated by the destination field *rd*;
- third line, instruction RRc ("register-to-register with carry/borrow"): it is an instruction that performs an arithmetic operation used to calculate the sum or the subtraction between two numbers that have values representable with more than 16 bits, as will be explained in more detail below;
- fourth line, instruction J ("direct jump"): it is an instruction that performs a "direct jump" operation, that is the instruction of the program is transferred to an address of the program memory given by the sum of the value of the current address of the PC register with the value contained in a field of the instruction J;
- fifth line, instruction JR ("indirect jump"): it is an instruction that performs an "indirect jump" operation, that is the program instruction is transferred to an address of the programs memory given by the value of the address contained in a field of the instruction JR;
- sixth line, instruction B ("branch"): it is an instruction that performs a "conditional jump" operation, that is the instruction of the program is transferred to an address of the programs memory given by the sum of the value of the current address of the register PC with the value contained in a field of the instruction B, in case a Boolean value contained in a register specified in another field of the instruction B is true, otherwise the program continues to the ' subsequent address of the programs memory;
- seventh line, instruction MV ("move"): it is an instruction that performs an operation of copying a value of a register to any other register, including the special registers;
- eighth line, instruction WFI ("wait for interrupt"): it is an instruction that stops the operation of the Central Processing Unit, waiting to receive an interrupt request to be served by a peripheral device;
- ninth line, instruction BKPT ("breakpoint"): it is an instruction that stops the operation of the Central Processing Unit, waiting to receive commands from the debug interface;
- tenth line, instruction LI ("load immediate"): it is an instruction that performs a copy operation in a rd register (indicated in a field of the instruction LI) of a constant (immediate) value indicated in another field of the instruction LI;
- eleventh line: LS instruction ("load" or "store"): it is an instruction that manages 16- or 8-bit data transfer operations between the central program memory or the central volatile memory and the internal registers. In the case of a "load", the instruction copies a value from the central programs memory or from the central volatile memory into an internal register (indicated in a field of the instruction LS). This value is stored at the address resulting from the sum between the content of a register indicated by the value of a bit bₛ (contained in the LS instruction) and a constant value (contained in the LS instruction). The bit bₛ indicates whether the implicit register W or the register SP is used. In the case of a "store", the instruction transfers a value present in an internal register in the central volatile memory to the address calculated in the same way;
- twelfth line (CA, "compressed arithmetic" instruction): it is an instruction that performs an arithmetic or logic operation with compressed format, as will be explained in more detail below;
- thirteenth line: instruction PP ("push/pop"): it is an instruction that performs a data transfer operation between the central program memory or the central volatile memory and the internal registers. It allows multiple load/store operations to be performed in a single instruction.

It can be seen that all instructions have a length of 16 bits, except for the instruction RI ("register-to-immediate operation") which has a length equal to 32 bits.

Each of the thirteen instructions having the format 1 comprises a first field composed of three bits, in particular the bits in position 5, 6 and 7, which have the function of indicating the format of the instruction.

In fact, according to the invention it is possible to identify the format of the instructions by analysing only the value of the 3 bits of the first field of the instructions, in particular the values of the bits in position 5, 6 and 7 of the instructions having the format 1.

In particular, Figure 1 shows that the following values of the 3 bits of the first field in position 5, 6, 7 of the instructions having the format 1 are used:
- '0', '0', '0': identifies the format of a first set of instructions composed of the instruction RR and the instruction RI;
- '1', '0', '0': identifies the format of a second set of instructions composed of the instruction RRc and the instruction L;
- '1', '1', '1': identifies the format of a third set of instructions composed of the instructions J, JR, MV, WFI, BKPT or LI;
- '0', '0', '1': identifies the format of an instruction B;
- '1', '1', '0': identifies the format of a compressed instruction AC;
- '1', '0', '1': identifies the format of a fourth set of instructions composed of the instruction LB and the instruction PP;
- '0', '1', '0': identifies the format of an instruction S;
- '0', '1', '1': Identifies the format of a instruction SB.

It is therefore possible to analyse only the 3 bits of the first field in position 5, 6, 7 of the instructions, in order to be able to discriminate between 8 possible instructions formats, which are four groups of instructions and the instructions B, compressed CA, S and SB: in this way the time taken by the Decoding Unit 52 to decode the instructions format (that is, distinguishing between 8 possible instructions formats) is significantly reduced, thus allowing each instruction to be executed in a single clock cycle of the processor comprising the Central Processing Unit 50. As a result, the electrical power consumption of the processor is significantly reduced and the area occupied by the logic of the Decoding Unit 52 that performs the decoding is also reduced.

It can also be seen (in the instructions format 1) that the instructions RR ("register-to-register operation") and RI ("register-to-immediate operation") comprise a second field composed of one bit (in particular, the bit in position 0) having '0' as first value to identify the instruction RR and '1' as second value to identify the instruction RI: in this way the Decoding unit 52 is able to distinguish between the instruction RR and the instruction RI by analysing only 4 bits of the instruction, that is, by identifying the value '0', '0', '0' of the first field and the value '0' or '1' of the second field.

Alternatively, the value of the bit of the second field in position 0 of the instruction RR is equal to '1', while the value of the bit of the second field in position 0 of the instruction RI is equal to '0'.

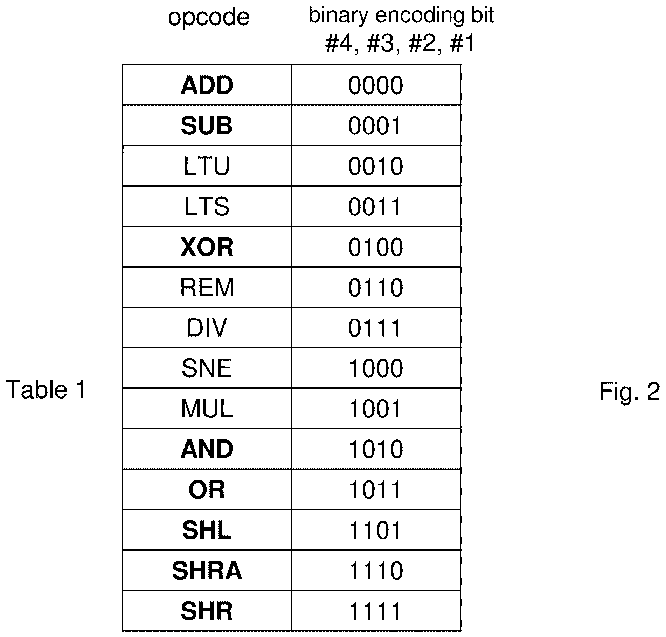

In particular, the 16-bit instruction RR is composed of the following 5 fields:
- one bit in position 0: it contains the value '0';
- four bits in position 4, 3, 2, 1 (opcode field): they contains the operating code representative of an arithmetic or logic operation, having the values indicated in Table 1 of Fig. 2;
- three bits in position 7, 6, 5 (first field indicated above): they have a value of '0', '0', '0', respectively;
- four bits in position 11, 10, 9, 8 (source field rs1): they identify one of the possible registers r0, r1...r11, W, RA, SP to be used as an input source register for an arithmetic or logic operation;
- four bits in position 15, 14, 13, 12 (destination field rd): they identify one of the possible registers r0, r1...r11, W, RA, SP to be used as destination register to store the result of the arithmetic or logic operation.

The instruction RR performs an arithmetic or logic operation indicated by the opcode field that takes as input the contents of the register indicated by the source field *rs1* of the instruction RR and the contents of the implicit register W and copies the result of the operation to one of the possible registers r0, r1...r11, W, RA, SP indicated by the destination field *rd* of the instruction RR.

The 32-bit instruction RI is composed of the following 5 fields:
- one bit in position 0: it contains the value '1';
- three bits in position 7, 6, 5 (first field indicated above): they have a value of '0', '0', '0' respectively;
- four bits in position 4, 3, 2, 1 (opcode field): they contain the operating code representative of an arithmetic or logic operation, having the values indicated in Table 1 of Fig. 2;
- four bits in position 11, 10, 9, 8 (source field *rs1*): they identify one of the possible registers r0, r1...r11, W, RA, SP to be used as an input source register for an arithmetic or logic operation;
- four bits in position 15, 14, 13, 12 (destination field *rd*): they identify one of the possible registers r0, r1...r11, W, RA, SP to be used as the destination register of the arithmetic or logic operation;
- sixteen bits from position 32 to 16 (immediate field i[15:0]): they contain a constant (immediate) value to be used in an arithmetic or logic operation.

The instruction RI performs an arithmetic or logic operation indicated by the opcode field that takes as input the contents of the register indicated by the source field *rs1* of the instruction RI and the constant value contained in the immediate field i[15:0] and copies the result of the operation to one of the possible registers r0, r1...r11, W, RA, SP indicated by the destination field *rd* of the instruction RI.

Table 1 in Figure 2 shows the possible values of the operating code opcode, which represent the type of arithmetic or logic operation performed by the instruction RR or the instruction RI.

In particular, the bits in position 4, 3, 2, 1 of the operating code opcode adopt the following values, respectively:
- '0', '0', '0', '0': they identify the arithmetic operation ADD (addition) between the content of one of the possible registers r0, r1...r11, W, RA, SP indicated by the source field *rs1* of the instruction RR and the content of the implicit register W for the instruction RR, or between the content of one of the possible registers r0, r1...r11, W, RA, SP indicated by the source field *rs1* of the instruction RI and the constant immediate value for the instruction RI;
- '0', '0', '0', '1': they identify the arithmetic operation SUB (subtraction) between the content of one of the possible registers r0, r1...r11, W, RA, SP indicated by the source field *rs1* of the instruction RR and the content of the implicit register W for the instruction RR, or between the content of one of the possible registers r0, r1...r11, W, RA, SP indicated by the source field rs1 of the instruction RI and the constant immediate value for the instruction RI;
- '0', '0', '1', '0': they identify the logic operation LTU (less than unsigned). It is a (minor) comparison operation between two values interpreted as numbers without signs. The first value is the content of one of the possible registers r0, r1...r11, W, RA, SP indicated by the source field *rs1* of the instructions RR or RI, the second value is the content of the implicit register W for the instruction RR, or the constant immediate value for the instruction RI.

- '0', '0', '1', '1': they identify the logic operation LTS (less than signed). It is a (minor) comparison operation between two values interpreted as numbers with signs. The first value is the content of one of the possible registers r0, r1...r11, W, RA, SP indicated by the source field *rs1* of the instructions RR or Ri, the second value is the content of the implicit register W for the instruction RR, or t the constant immediate value for the instruction RI.
- '0', '1', '0', '0': they identify the logic operation XOR (XOR logic) between the content of one of the possible registers r0, r1...r11, W, RA, SP indicated by the source field *rs1* of the instruction RR and the content of the implicit register W for the instruction RR, or between the content of one of the possible registers r0, r1...r11, W, RA, SP indicated by the source field *rs1* of the instruction RI and the constant immediate value for the instruction RI;
- '0', '1', '1', '0': they identify the arithmetic operation REM (remainder). It is an operation that calculates the remainder of the division between the content of one of the possible registers r0, r1...r11, W, RA, SP indicated by the source field *rs1* of the instruction RR and the content of the implicit register W for the instruction RR, or between the content of one of the possible registers r0, r1...r11, W, RA, SP indicated by the source field *rs1* of the instruction Ri and the constant immediate value for the instruction RI;
- '0', '1', '1', '1': they identify the arithmetic operation DIV (division) between the content of one of the possible registers r0, r1...r11, W, RA, SP indicated by the source field *rs1* of the instruction RR and the content of the implicit register W for the instruction RR, or between the content of one of the possible registers r0, r1...r11, W, RA, SP indicated by the source field *rs1* of the instruction RI and the constant immediate value for the instruction RI;
- '1', '0', '0', '0': they identify the operation SNE (set not equal). This is an inequality operation between the content of one of the possible registers r0, r1...r11, W, RA, SP indicated by the source field *rs1* of the instruction RR and the content of the implicit register W for the instruction RR, or between the content of one of the possible registers r0, r1...r11, W, RA, SP indicated by the source field *rs1* of the instruction RI and the constant immediate value for the instruction RI;
- '1', '0', '0', '1': they identify the arithmetic operation MUL (multiplication) between the content of one of the possible registers r0, r1...r11, W, RA, SP indicated by the source field *rs1* of the instruction RR and the content of the implicit register W for the instruction RR, or between the content of one of the possible registers r0, r1...r11, W, RA, SP indicated by the source field *rs1* of the instruction RI and the constant immediate value for the instruction RI;
- '1', '0', '1', '0': they identify the AND logic operation between the content of one of the possible registers r0, r1...r11, W, RA, SP indicated by the source field *rs1* of the instruction RR and the content of the implicit register W for the instruction RR, or between the content of one of the possible registers r0, r1...r11, W, RA, SP indicated by the source field *rs1* of the instruction RI and the constant immediate value for the instruction RI;
- '1', '0', '1', '1': they identify the logic operation OR (OR logic) between the content of one of the possible registers r0, r1...r11, W, RA, SP indicated by the source field *rs1* of the instruction RR and the content of the implicit register W for the instruction RR, or between the content of one of the possible registers r0, r1...r11, W, RA, SP indicated by the source field *rs1* of the instruction RR and the constant immediate value for the instruction RI;
- '1', '1', '0', '1': they identify the logic operation SHL (shift left logic) indicative of a shift to the left of the bits of one of the possible registers r0, r1...r11, W, RA, SP indicated by the source field *rs1* for a number of bits equal to the content of the implicit register W for the instruction RR, or indicative of a shift of bits to the left of one of the possible registers r0, r1...r11, W, RA, SP indicated by the source field *rs1* for a number of bits equal to the immediate value, in which the bits added to the right have the value '0';
- '1', '1', '1', '0': they identify the logic operation SHRA (shift right arithmetic) indicative of a shift to the right of the bits of one of the possible registers r0, r1...r11, W, RA, SP indicated by the source field rs1 for a number of bits equal to the content of the implicit register W for the instruction RR, or indicative of a shift to the left of the bits of one of the possible registers r0, r1...r11, W, RA, SP indicated by the source field rs1 for a number of bits equal to the immediate value, in which the bits added to the left have a value equal to the most significant bit;
- '1', '1', '1', '1': they identify the logic operation SHR (shift right logic) indicative of a shift to the right of the bits of one of the possible registers r0, r1...r11, W, RA, SP indicated by the source field rs1 for a number of bits equal to the content of the implicit register W for the instruction RR, or indicative of a shift to the right of the bits of one of the possible registers r0, r1...r11, W, RA, SP indicated by the source field rs1 for a number of bits equal to the immediate value, in which the bits added to the left have the value '0'.

The 16-bit instruction RRc is composed of the following 5 fields:
- one bit in position 0: it contains the value '0';
- three bits in position 7, 6, 5 (first field indicated above): they have a value of '1', '0', '0', respectively;
- four bits in position 11, 10, 9, 8 (source field rs1): they identify one of the possible registers r0, r1...r11, W, RA, SP to be used as source register *rs1* of an arithmetic or logic operation;
- four bits in position 15, 14, 13, 12 (destination field rd): they identify one of the possible registers r0, r1...r11, W, RA, SP to be used as destination register *rd* of the arithmetic or logic operation;
- four bits in position 4, 3, 2, 1 (ADD|SUB field): they indicate whether it is an addition arithmetic operation with carryover or a difference with loan.

It is therefore possible by means of the instruction RRc to perform a sum operation between two numbers having values which can be represented with more than 16 bits (for example, 32 bits) using a sequence of an instruction RR (operating code opcode= ADD) that adds the 16 bits [15:0] of the two operands and generates a carry-over as output, followed by an instruction RRc (with bits 4, 3, 2, 1 indicative of the sum) that adds the remaining 16 bits [31:16] of the two operands and using the carry-over of the first instruction RR.

Similarly, it is possible by means of the instruction RRc to perform a subtraction operation between two numbers having values which can be represented with more than 16 bits (for example, 32 bits) using a sequence of an instruction RR (operating code opcode= SUB) that performs the difference between the 16 bits [15:0] of the two operands and generates a loan as output, followed by an instruction RRc (with bits 4, 3, 2, 1 indicative of subtraction) that subtracts between the remaining 16 bits [31:16] of the two operands and using the loan of the first instruction RR.

The 16-bit instruction J ("direct jump") is composed of the following 5 fields:
- one bit in position 0: it contains the value '1';
- three bits in position 7, 6, 5 (first field indicated above): they have a value of '1', '1', '1' respectively;
- one bit in position 1: it contains the value '0';
- a bit in position 2: it contains the value L, which, if set to '1', allows the instruction to save the contents of the register PC in the internal register RA, before jumping to the subsequent instruction;
- ten bits (immediate field i[10:1]), of which 8 bits from position 10 to 3 and two bits in positions 4, 3: they contain a constant (immediate) value represented by 10 bits, in which the most significant bits from 10 to 3 are in positions 15 to 8, respectively, of the instruction J and in which the least significant bits 2, 1 are in positions 4, 3 of the instruction J, respectively.

Since the immediate is a 16-bit constant, the bit in position 0 is always set to '0', acting as an indicator to ensure the value remains even. Further, the most significant 5 bits, which extend to cover the bits from 15 to 11, report the sign extension. This means that the bit in position 10 is copied to all these positions to maintain the correct numerical value and ensure that the operation correctly handles any negative values.

The instruction J performs the transfer of the execution of the program to the address of the programs memory given by the sum of the value of the current address of the register PC with the value i[15:0] obtained from the immediate field of the instruction J.

The 16-bit instruction JR ("indirect jump") is composed of the following 7 fields:
- one bit in position 0: it contains the value '1';
- three bits in position 7, 6, 5 (first field indicated above): they have a value of '1', '1', '1', respectively;
- one bit in position 1: it contains the value '1';
- one bit in position 2: it contains the value L, which, if set to '1', allows the instruction to save the contents of the register PC in the internal register RA, before jumping to the subsequent instruction;
- four bits in position 11, 10, 9, 8 (source field rs): they identify one of the possible registers r0, r1...r11, W, RA, SP to be used as source register *rs* containing the value of an address;
- four bits from position 15 to 12: they have negligible values.

The instruction JR performs the transfer of the execution of the program to the address of th eprograms memory given by the value of the address contained in the source field of the instruction JR.

The 16-bit instruction B ("branch") is composed of the following 4 fields:
- three bits in position 7, 6, 5 (first field indicated above): they have a value of '0', '0', '1' respectively;
- nine bits (immediate field i[9:1])), of which 4 bits from position 15 to 12 and 5 bits from position 5 to 1: they contain a constant (immediate) value, in which the most significant bits from 9 to 6 (i[9:6]) are in positions 9 to 6 respectively of instruction B and in which the least significant bits from 5 to 1 (i[5:1]) are in positions 5 to 1 respectively of instruction B.

Since the immediate is a 16-bit constant, the bit in position 0 is always set to '0', acting as an indicator to ensure that the value remains the same. Further, the most significant 6 bits, which extend to cover bits 15 to 10, report the sign extension. This means that the bit in position 9 is copied to all these positions to maintain the correct numerical value and ensure that the operation correctly handles any negative values;
- four bits (condition field rs) from position 11 to 8: they identify one of the possible registers r0, r1...r11, W, RA, SP to be used as source register *rs* that contains a condition to be respected to perform an instruction jump.

Instruction B performs the transfer of the execution of the program to the address of the programs memory given by the sum of the value of the current address of the register PC with the value i[15:0] obtained from the immediate field of instruction B, in the event that a Boolean value contained in the condition field of instruction B is true, otherwise the program continues to the subsequent address of the programs memory.

The 16-bit instruction MV ("move") is composed of the following 6 fields:
- three bits in position 7, 6, 5 (first field indicated above): they have a value of '1', '1', '1' respectively;
- three bits in positions 2, 1, 0: they contain the values' 0 ',' 0 ',' 0 respectively;
- one bit in position 3 (field Sₛ, special source ): it contains the value '0' or '1' and indicates whether the source field refers to "special" internal registers;
- one bit in position 4 (field S_{d}, special destination ): it contains the value '0' or '1' and indicates whether the destination field refers to "special" internal registers;
- four bits from position 11 to 8 (source field *rs1*): they identify one of the possible registers r0, r1...r11, W, RA, SP to be used as source register *rs1* of an operation for copying values between registers;
- four bits from position 15 to 12 (destination field *rd*): they identify one of the possible registers r0, r1...r11, W, RA, SP to be used as destination register of an operation of copying the value from a source register to the destination register.

The 16-bit instruction MV copies the value of one of the possible registers r0, r1...r11, W, RA, SP, or "special" registers, indicated by the value of the source field rs1 and by the bit Ss of the instruction MV into one of the possible registers r0, r1...r11, W, RA, SP, or "special" registers, indicated by the value of the field rd of the instruction MV and by the bit Sd.

The 16-bit instruction WFI ("Wait for Interrupt") is composed of the following 3 fields:
- three bits in position 7, 6, 5 (first field indicated above): they have a value of '1', '1', '1' respectively;
- five bits in positions 4, 3, 2, 1, 0: they have values '1', '1', '1', '0', '0', respectively;
- eight bits from position 15 to 8: they have negligible values.

The instruction WFI is used to block the execution of the program waiting in an interrupt state by an external device.

The 16-bit instruction BKPT ("Breakpoint") is composed of the following 3 fields:
- three bits in position 7, 6, 5 (first field indicated above): they have a value of '1', '1', '1' respectively;
- five bits in positions 4, 3, 2, 1, 0: they have values '1', '1', '0', '0', '0', respectively;
- eight bits from position 15 to 8: they have negligible values.

The instruction BKPT is used to block the execution of the program waiting for a signal from the debug interface.

The 16-bit instruction LI ("load immediate") is composed of the following 4 fields:
- three bits in position 7, 6, 5 (first field indicated above): they have a value of '1', '1', '1' respectively;
- two bits in position 1, 0: they contain the values' 1 ',' 0 'respectively;
- seven bits in positions 11, 10, 9, 8, 4, 3, 2 (immediate field i[6.0]): they contain a constant (immediate) value represented by 7 bits, wherein the most significant bits from 6 to 3 (i[6:3]) are in positions 11 to 8 of the instruction LI, respectively, and wherein the least significant bits from 2 to 0 (i[2:0]) are in positions 4 to 2 of the instruction LI, respectively. Since the immediate is a 16-bit constant, the 9 most significant bits, which extend to cover bits 15 to 7, report the sign extension. This means that the bit in position 6 is copied to all these positions to maintain the correct numerical value and ensure that the operation correctly handles any negative values;
- four bits in positions 15 to 12 (field rd): they identify one of the possible registers r0, r1...r11, W, RA, SP to be used as the destination register rd in an operation for copying the constant value i[6:0].

The instruction LI copies the constant value i[15:0] (obtained starting from the immediate field of the instruction LI) into the internal register (selected from the registers r0, r1...r11, RA, W, SP) indicated by the value of the field rd of the instruction LI.

The 16-bit instructions L, LB, S, SB are composed of the following 6 fields:
- three bits in position 7, 6, 5 (first field indicated above): they have the value, respectively, of '1', '0', '0' for instruction L, '1', '0', '1' for instruction LB, '0', '1', '0' for instruction S, '0', '1', '1' for instruction SB;
- one bit in position 0: it has value '1';
- seven bits (immediate field i[6:0]), of which 4 bits from position 11 to 8 and 3 bits from position 4 to 2. Since the immediate is a 16-bit constant, the 9 most significant bits, which extend to cover bits 15 to 7, are always set to '0'. This choice ensures that the immediate is treated as a positive value. The immediate indicates the constant value to be added to a basic address contained in the internal register specified in the subsequent field rx;
- four bits in position from 15 to 12 (rx field): they identify one of 15 possible registers r0, r1...r11, W, RA, SP to be used as a source register in a "store" operation and as a destination register in a "load" operation;
- one bit in position 11 (field bₛ): it indicates whether to use the implicit register W or the register SP in an address adding operation (the value '0' indicates to use the implicit register W, while the value '1' indicates to use the register SP).

The instructions L, LB, S, SB perform 16- or 8-bit data transfer operations between the central programs memory or the central volatile memory and the internal registers of the bank 53. In the case of instructions L and LB, they copy, respectively, two bytes or one byte from the central programs memory or from the central volatile memory into an internal register of the bank 53 (indicated by the rx field of the instruction). This value is stored at the address resulting from the sum between the content of the implicit register W or of the register SP as indicated by the value of the field bₛ of the instruction and the constant value obtained from the immediate field i[15:0]. In the case of S and SB instructions, they transfer, respectively, two bytes or one byte present in an internal register in the central volatile memory to the address calculated in the same way as the instructions L and LB.

It should be noted that the instructions MV, WFI, BKPT, LI have the same values as the first field in the bits 7, 6, 5 (that is, '1', '1', '1') and the same value as the bit 0 (that is, '0'): in this case it is possible to distinguish between the instructions MV, WFI, BKPT and the instruction LI by further taking into account the bit in position 1 of the instruction to be decoded:
- in the case in which the bit in position 1 is equal to '1', the instruction is LI;
- in the case in which the bit in position 1 is equal to '0', the instruction is MV or WFI or BKPT.

In the second case it is possible to distinguish between the instruction WFI and the instructions MV, BKPT taking further into account the bit in position 2 of the instruction to be decoded:
- in the case in which the bit in position 2 is equal to '1', the instruction is WFI;
- in case in which the bit in position 2 is equal to '0', the instruction is MV or BKPT.

Finally, it is possible to distinguish between the instructions MV and the instruction BKPT taking further into account the bits in position 4 and 3 of the instruction to be decoded:
- in the case in which the bits in position 4, 3 are equal, respectively, to '1', '1', the instruction is BKPT;
- in the other cases ('1', '0' - '0', '1' - '0', '0') the instruction is MV and the two bits represent the fields Sd and Ss, respectively.

The compressed 16-bit instruction AC is composed of the following 5 fields:
- three bits in position 7, 6, 5: they contain the first field indicated above and have the value '1', '1', '0', respectively;
- three bits in position 3, 2, 1 (compressed operating code field "op"): they contain an operating code representative of one of eight possible arithmetic or logic operations. The corresponding operating code indicated in Table 1 of Fig.2 is obtained by adding to the left of the operating code field "op" the bit resulting from the logic operation (op[0] & op[2]) | op[1];
- four bits in position 15, 11, 4, 0 (immediate field i[3:0]): they contain a constant (immediate) value represented by 4 bits, in which the most significant bit (i[3]) is in position 15 of the compressed instruction CA, the least significant bit is in position 0 of the compressed instruction CA and the remaining two bits are in positions 11 and 4 of the compressed instruction CA. Since the immediate is a 16-bit constant, the 12 most significant bits, which extend to cover bits 15 to 4, are always set to '0';
- three bits respectively in position 10, 9, 8 (compressed source field rs): they identify one of 8 possible registers r0, r1... r6, W, to be used as source register *rs* of an arithmetic or logic operation;
- three bits respectively in position 14, 13, 12 (compressed recipient field rd): they identify one of 8 possible registers r0, r1... r6, W, to be used as destination register *rd* of the arithmetic or logic operation.

The compressed instruction CA performs an arithmetic or logic operation indicated by the op field that takes as input the contents of the register indicated by the source field *rs* of the compressed instruction CA and the constant value obtained from the immediate i[3:0]. The result of the operation is copied into one of the possible registers r0, r1...r 6, W indicated by the destination field rd of the compressed instruction CA.

Table 1 in Figure 2 shows the possible values of the operating code (ADD, SUB, XOR, AND, OR, SHL, SHRA, SHR) of the compressed instructions CA obtained by adding to the left of the operating code field "op" the bit resulting from the logic operation (op[0] & op[2]) | op[1].

The compressed instruction CA allows most of the arithmetic and logic operations, with 4-bit immediates, to be performed using 16 bits (instead of 32 bits) and using only 8 registers (instead of 14 registers): in this way it is possible to obtain the machine language code that is more compact, thus improving the performance of the software program when it is executed in machine language by means of the Central Processing Unit 50 of a processor.

The 16-bit instruction PP (push/pop) is composed of the following 4 fields:
- three bits in position 7, 6, 5 (first field indicated above): they have a value of '1', '0', '1', respectively;
- three bits in position 2, 1, 0: they contain the values' 1 ',' 0 ',' 0 'respectively;
- one bit in position 3 (field LS): it indicates whether the operation is a push (load multiple) or a pop (store multiple), adopts the value '0' to indicate the push and the value '1' to indicate the pop.
- one bit in position 4 (field LH): it specifies whether the operation involves, respectively, the 8 internal low registers (r0,..., r6, W) or the 8 high registers (r7,..., r11, RA), adopts the value '0' to indicate the low registers and the value '1' to indicate the high registers. The PC and SP registers are excluded from this instruction.
- eight bits in position 15, 14, 13, 12, 11, 10, 9, 8 (field REGISTER LIST, abbreviated REG_LS): they represent a list of registers: each bit corresponds to a high or low bank register, as indicated by the field LH, and adopts the value '1' or '0' to include or exclude that register from the operation.

The instruction PP allows multiple load or store operations to be performed in a single instruction. In the case of a push operation (with the field LS at '0'), the internal registers specified by the field LH, which have the value '1' in the Register List field, are saved in the central volatile memory at the address subsequent to that contained in the SP register. In the case of a pop operation (with the field LS at '1'), the data from the central programs memory or from the central volatile memory at the address subsequent to the one contained in the SP register are transferred to the internal registers specified by the field LH and with the value '1' in the Register List field.

The instruction PP optimises the transfer of data from an external central memory, allowing multiple load or store instructions to be grouped in a single operation, thereby reducing the number of clock cycles required to read or save multiple registers and consequently the power consumption.

Figure 3 shows a block diagram of a Central Processing Unit 50 based on the instructions format 1 of the Instruction Set Architecture (ISA) of Figure 1.

The Central Processing Unit 50 is implemented, for example, within an electronic processor or a microprocessor, which comprises further hardware components, such as for example the central programs memory and a Graphics Processing Unit (GPU).

The electronic processor or microprocessor is mounted, for example, on a printed circuit board within a fixed or laptop computer.

The Central Processing Unit 50 comprises the following main functional blocks:
- the Fetch Unit 51;
- the Decoding unit 52;
- the internal register bank 53;
- the Arithmetic Logic Unit 54;
- a Memory Interface Unit 55.

The Fetch Unit 51 is responsible for managing the flow of instructions. During each clock cycle, the Fetch Unit 51 retrieves the subsequent instruction from the address stored in the Program Counter register PC, unless a jump or deviation condition occurs; in such cases, the Fetch Unit 51 loads into the Program Counter register PC a new address calculated by the Arithmetic Logic Unit 54, thus guaranteeing the flexibility necessary for the execution of cycles (loops), conditional instructions and jump operations. This mechanism ensures an orderly and optimised execution of the program, with the ability to handle interruptions in the sequential flow of instructions.

The Decoding Unit 52 (that is, a decoder) has the function of interpreting the instructions retrieved from the Fetch Unit 51. The Decoding Unit 52 analyses the 16-bit instructions, distinguishing between the different types of instructions required by the Instruction Set Architecture 1, as illustrated above. Through the identification of the key fields (in particular, taking into account the three bits at positions 5, 6, 7 and possibly an additional bit), the Decoding Unit 52 determines firstly the format of the instruction, then identifies the particular current instruction and then determines which registers and which operations are involved in the current instruction; this allows the Central Processing Unit 50 to efficiently manage a set of 13 instructions, optimising the use of the bits and minimising the complexity of the decoding process.

The Internal Register bank 53 consists of the 16 registers previously named with r0, r1, ..., r11, W, RA, SP, PC. Each register is directly addressable and provides the data necessary for the operations performed by the Arithmetic Logic Unit 54.

The Arithmetic Logic Unit (ALU) 54 performs the arithmetic and logic operations necessary for processing the instructions. Designed with a pipeline-free architecture to reduce power consumption, the Arithmetic Logic Unit 54 processes the data provided by the internal registers r0, r1, ..., r11, W, RA, SP and determines the results based on the operating code of the considered instruction. Thanks to its constructive simplicity, the Logic Arithmetic Unit 54 optimises the operational efficiency by reducing the number of logic transitions for each operation, which helps to minimise power dissipation and increase the overall efficiency of the Central Processing Unit 50 and therefore of the processor of which it forms part.

The Memory Interface Unit 55 is responsible for the management of the communication between the Central Processing Unit 50 and the two external central memories to the Central Processing Unit 50: the programs memory and the volatile memory. The Memory Interface Unit 55 manages the operations of reading instructions from the programs memory and reading and writing in the volatile memory. The Memory Interface Unit 55 ensures the correct transfer of data between the central programs memory and the fetch unit 51 and between the central volatile memory or the central programs memory and the internal registers r0, r1, ..., r11, W, RA, SP. During the store, store byte or push operations illustrated above, the Memory Interface Unit 55 generates the necessary signals to enable writing in the central volatile memory; during the load, load byte or pop operations, the Memory Interface Unit 55 coordinates the transfer of data from the central programs memory or from the central volatile memory to the internal registers r0, r1, ..., r11, W, RA, SP, ensuring that the information is available for subsequent processing.

In particular, the Decoding Unit 52 has the function of identifying the format of the current instruction among the possible 8 instructions formats and then identifying (within the possible 8 formats) the current instruction among the possible 13 Architecture Instructions of an Instructions Set 1 of Figure 1.

The Decoding Unit 52 is then configured to receive as input a 16-bit word W_I equal to one of the possible instructions containing the bits from the position 15 to 0 of the Instruction Set Architecture 1 of Figure 1, the Decoding Unit 52 is then configured to analyse the bits in position 7, 6, 5 (first field) in order to identify whether they are:
- an instruction RR/RI: in this case the Decoding Unit 52 detects that the bits in position 7, 6, 5 are equal, respectively, to '0', '0', '0'; or
- an instruction RRc or an instruction L: in this case the Decoding Unit 52 detects that the bits in position 7, 6, 5 are equal, respectively, to '1', '0', '0'; or
- an instruction J or JR or MV or WFI or BKPT or LI : in this case the Decoding Unit 52 detects that the bits in position 7, 6, 5 are equal, respectively, to '1', '1', '1'; or
- an instruction B: in this case the Decoding Unit 52 detects that the bits in position 7, 6, 5 are equal, respectively, to '0', '0', '1'; or
- a compressed instruction CA: in this case the Decoding Unit 52 detects that the bits in position 7, 6, 5 are equal, respectively, to '1', '1', '0';
- an instruction LB or an instruction PP: in this case the Decoding Unit 52 detects that the bits in position 7, 6, 5 are equal to '1', '0', '1', respectively;
- an instruction S: in this case the Decoding Unit 52 detects that the bits in position 7, 6, 5 are equal to '0', '1', '0', respectively;
- an instruction SB: in this case the Decoding Unit 52 detects that the bits in position 7, 6, 5 are equal to '0', '1', '1', respectively.

It is therefore possible to distinguish between 8 possible formats of instructions by analysing only 3 bits, thus without wasting a greater number of bits.

In the case that the Decoding Unit 52 has detected that the bits in position 7, 6, 5 of the received word W_I are equal to '0', '0', '0', respectively, the Decoding Unit 52 is further configured to analyse the bit in position 0 of the received word W_I, in order to distinguish whether it is an instruction RR or RI:
- in the case that the Decoding Unit 52 detects that the bit in position 0 of the received word W_I is equal to '0', the instruction RR is decoded;
- in the case that the Decoding Unit 52 detects that the bit in position 0 of the received word W_I is equal to '1', the instruction RI is decoded.

In the case that the Decoding Unit 52 has detected that the bits in position 7, 6, 5 of the received word W_I are equal to '1', '1', '1', respectively, the Decoding Unit 52 is further configured to analyse the bit in position 0 of the received word W_I, in order to distinguish whether it is an instruction J or JR or whether it is an instruction MV or WFI or BKPT or LI;
- in the case that the Decoding Unit 52 detects that the bit in position 0 of the received word W_I is equal to '1', the instruction J or JR is detected;
- in the case that the Decoding Unit 52 detects that the bit in position 0 of the received word W_I is equal to '0', the instruction MV or WFI or BKPT or LI is decoded.

In the case that the Decoding Unit 52 has detected an instruction J or JR, the Decoding Unit 52 is further configured to analyse the bit in position 1 of the received word W_I in order to distinguish between the instructions J and JR:
- in the case that the Decoding Unit 52 detects that the bit in position 1 of the received word W_I is equal to '0', the instruction J is decoded;
- in the case that the Decoding Unit 52 detects that the bit in position 1 of the received word W_I is equal to '1', the instruction JR is decoded.

In the case that the Decoding Unit 52 has detected an instruction MV or WFI or BKPT or LI, the Decoding Unit 52 is further configured to analyse the bits in position 1 of the received word W_I in order to distinguish between the instructions MV, WFI, BKPT or LI:
- in the case that the Decoding Unit 52 detects that the bit in position 1 is equal to '0', the instruction MV or WFI or MV is detected;
- in the case that the Decoding Unit 52 detects that the bit in position 1 is equal to '1', the instruction LI is decoded.

In the case that the Decoding Unit 52 has detected an instruction MV or WFI or BKPT, the Decoding Unit 52 is further configured to analyse the bits in position 2 of the received word W_I in order to distinguish between the instructions MV, BKPT or WFI:
- in the case that the Decoding Unit 52 detects that the bit in position 2 is equal to '0', the instruction MV or BKPT is detected;
- in the case that the Decoding Unit 52 detects that the bit in position 2 is equal to '1', the instruction WFI is decoded.

In the case that the Decoding Unit 52 has detected an instruction MV or BKPT, the Decoding Unit 52 is further configured to analyse the 2 bits in position 3 and 4 of the received word W_I in order to distinguish between the instructions MV and BKPT:
- in the case that the Decoding Unit 52 detects that the bits in position 3 and 4 are equal to '1' '1', the instruction BKPT is detected;
- in the case that the Decoding Unit 52 detects that the bits in position 3 and 4 are equal to '0' '0' or '0' '1' or '1' '0', the instruction MV is decoded.

In the case that the Decoding Unit 52 has detected that the bits in position 7, 6, 5 of the received word W_I are equal, respectively, to '1', '0', '0', the Decoding Unit 52 is further configured to analyse the bit in position 0 of the received word W_I, in order to distinguish whether it is an instruction RRc or L:
- in the case that the Decoding Unit 52 detects that the bit in position 0 of the received word W_I is equal to '0', the instruction RRc is decoded;
- in the case that the Decoding Unit 52 detects that the bit in position 0 of the received word W_I is equal to '1', the instruction L is decoded.

In the case that the Decoding Unit 52 has detected that the bits in position 7, 6, 5 of the received word W_I are equal to '0', '0', '1', respectively, the instruction B is decoded.

In the case that the Decoding Unit 52 has detected that the bits in position 7, 6, 5 of the received word W_I are equal to '1', '1', '0', respectively, the compressed instruction CA is decoded.

In the case that the Decoding Unit 52 has detected that the bits in position 7, 6, 5 of the received word W_I are equal to '1', '0', '1', respectively, the Decoding Unit 52 is further configured to analyse the bit in position 0 of the received word W_I, in order to distinguish whether it is an instruction LB or PP:
- in the case that the Decoding Unit 52 detects that the bit in position 0 of the received word W_I is equal to '0', the instruction PP is decoded;
- in the case that the Decoding Unit 52 detects that the bit in position 0 of the received word W_I is equal to '1', the instruction LB is decoded.

In the case that the Decoding Unit 52 has detected that the bits in position 7, 6, 5 of the received word W_I are equal, respectively, to '0', '1', '0', the instruction S is decoded.

In the case that the Decoding Unit 52 has detected that the bits in position 7, 6, 5 of the received word W_I are equal to '0', '1', '1', respectively, the instruction SB is decoded.

It is also an object of the present invention a method for implementing an Instruction Set Architecture (ISA) for a Central Processing Unit.

The method of implementing the Instruction Set Architecture comprises step a) of providing a plurality of instructions to be executed by the Central Processing Unit, each instruction comprising at least sixteen bits, comprises step b) of arranging at least part of said plurality of instructions into a plurality of instructions formats, wherein the number of the plurality of instructions formats is less than the number of the plurality of instructions, and comprises step c) of assigning, in each instruction of said plurality of instructions formats, a corresponding value of a first field composed of three bits, selected from the at least sixteen bits, for identifying the respective instructions format among said plurality of instructions formats.

In one embodiment, step b) of the implementation embodiment comprises arranging said plurality of instructions in said plurality of instructions formats and in at least one further instruction, wherein step c) further comprises assigning at least one further value of the first field of the at least one further instruction for respectively identifying the at least one further instruction.

In one embodiment, in step a) said plurality of instructions comprises a first instruction (RR) composed of 16 bits and comprises a second instruction (RI) composed of 32 bits, wherein in step b) a first instructions format, selected from the plurality of instructions formats, comprises the first instruction (RR) and the second instruction, wherein in step c) the first field contains a first defined value ('0', '0', '0') indicative of an instruction to execute a plurality of arithmetic or logic operations. The implementation method further comprises step d) of assigning, in a second field (#0) composed of one bit of the first instruction (RR), a first defined value ('0') indicative of an arithmetic or logic operation using as input a source register indicated by the value of a third field (rs1) of the first instruction, and assigning a fourth field (rd) of the first instruction indicative of a destination register in which to store a result of said operation, wherein the source register and the destination register are internal to the Central Processing Unit, comprises step e) of assigning, in a fifth field (i[15:0]) composed of 16 bits (#31...#16) of the second instruction (RI), a constant value, and comprises step f) of assigning, in a fifth field (i[15:0]) composed of 16 bits (#31...#16) of the second instruction (RI), a constant value.

In one embodiment, the number of the plurality of instructions formats is at least equal to 4 and the plurality of instructions is at least equal to 8, in particular equal to thirteen, wherein at least one instruction (in particular a single instruction, indicated above with RI) is composed of 32 bits and the remaining instructions are composed of 16 bits.

## Claims

1. Method implemented by at least one computer for implementing an Instruction Set Architecture (1) for a Central Processing Unit (50), the method comprising:
a) providing a plurality of instructions (RR, RI, RRc, J, JR, B, MV, WFI, BKPT, LI, L/LB/S/SB, CA, PP) to be executed by the Central Processing Unit, each instruction comprising at least sixteen bits (#15, #14, ... #1, #0);
b) arranging at least part of said plurality of instructions in a plurality of instructions formats (RR/RI; J/JR/MV/WFI/BKPT/LI; LB/PP; RRc/L), wherein the number of the plurality of instructions formats is smaller than the number of the plurality of instructions;
c) assigning, in each instruction of said plurality of instructions formats, a corresponding value of a first field composed of three bits (#7, #6, #5), selected from the at least sixteen bits, for identifying the respective instruction format (RR/RI; J/JR/MV/WFI/BKPT/LI; LB/PP; RRc/L) out of said plurality of instructions formats.

2. Method according to claim 1, wherein step b) comprises arranging said plurality of instructions in said plurality of instructions formats and in at least one further instruction,
and wherein step c) further comprises assigning at least one further value of the first field of the at least one further instruction for respectively identifying the at least one further instruction.

3. Method according to claim 1 or 2,
wherein in step a) said plurality of instructions comprises a first instruction (RR) composed of 16 bits and comprises a second instruction (RI) composed of 32 bits,
wherein in step b) a first instructions format, selected from the plurality of instructions formats, comprises the first instruction (RR) and the second instruction (RI),
wherein in step c) the first field contains a first defined value ('0', '0', '0') indicative of an instruction to execute a plurality of arithmetic or logic operations,
the method further comprising:
d) assigning, in a second field (#0) composed of one bit of the first instruction (RR), a first defined value ('0') indicative of an arithmetic or logic operation which uses as input a source register indicated by the value of a third field (rs1) of the first instruction, and assigning a fourth field (rd) of the first instruction indicative of a destination register in which to store a result of said operation, wherein the source register and the destination register are inside the Central Processing Unit;
e) assigning, in a fifth field (i[15:0]) composed of 16 bits (#31...#16) of the second instruction (RI), a constant value;
f) assigning, in the second field (#0) composed of one bit of the second instruction (RI), a second defined value ('1') indicative of a further arithmetic or logic operation which uses as input said constant value of the fifth field of the second instruction and the value of a source register of the Central Processing Unit indicated by the third field (rs1) of the second instruction, and assigning the fourth field (rd) of the second instruction indicative of a destination register in which to store a result of said further operation.

4. Method for implementing the Instruction Set Architecture according to any one of the preceding claims, wherein the number of the plurality of instructions formats is at least equal to 4 and the plurality of instructions is at least equal to 8, in particular equal to thirteen, wherein one instruction (RI) is composed of 32 bits and the remaining instructions are composed of 16 bits.

5. Instructions format (1) for a Central Processing Unit (50), wherein the instructions format is representative of a plurality of instructions (RR, RI, RRc, J, JR, B, MV, WFI, BKPT, LI, L/LB/S/SB, CA, PP) each composed of at least sixteen bits, the instructions format comprising a first field (#7, #6, #5) composed of three bits, selected from the at least sixteen bits, having a value indicative of an instruction format (RR/RI) out of a plurality of instructions formats (RR/RI; J/JR/MV/WFI/BKPT/LI; LB/PP; RRc/L), wherein the number of the plurality of instructions formats is smaller than the number of the plurality of instructions.

6. Instructions format according to claim 5, wherein the instructions format is representative of a first instruction (RR) composed of 16 bits and of a second instruction (RI) composed of 32 bits,
wherein the first field contains a first defined value ('0', '0', '0') indicative of an instruction to execute a plurality of arithmetic or logic operations,
the instructions format of the first (RR) and second instruction (RI) further comprising a second field (#0), a third field (rs1; #11 ... #8), a fourth field (rd; #15 ... #12) and a fifth field (opcode) composed of four bits (#4, #3, #2, #1),
the instructions format of the second instruction further comprising a sixth field (i[15:0]; #31... #16) composed of sixteen bits (#31...#16) which contain a constant value,
wherein:
- the second field (#0) is composed of one bit, selected from the sixteen bits different from the three bits of the first field, the second field having:
• a first defined value ('0') indicative of an arithmetic or logic operation which uses as input a source register indicated by the third field (rs1),
• a second defined value ('1') indicative of a logic or arithmetic operation which uses as input the source register and the constant value of the sixth field (#31...#16);
- the third field (rs1; #11 ... #8) is indicative of the source register out of a plurality of registers internal to the Central Processing Unit;
- the fourth field (rd; #15 ... #12) is indicative of a destination register, out of the plurality of registers internal to the Central Processing Unit, in which to store a result of the arithmetic or logic operation;
- the fifth field (opcode) is indicative of the arithmetic or logic operation.

7. Instructions format according to claims 5 or 6, wherein:
- a first instructions format is representative of an instruction (RR) for executing an operation between two registers internal to the Central Processing Unit and it is representative of an instruction (RI) to execute an operation between an internal register and a constant value;
- a second instructions format is representative of an instruction (RRc) to execute an addition or subtraction operation between two numbers with loan or carry-over and it is representative of an instruction (L) to execute a transfer of two bytes of data from a central program memory or from a central volatile memory to a bank of registers internal to the Central Processing Unit;
- a third instructions format is representative of an instruction to execute a direct jump (J) to an address of a program memory, is representative of an instruction to execute an indirect jump (JR) to an address of the program memory, is representative of an instruction to execute a copy (MV) of a value of one register to another register, is representative of an instruction to execute a wait for interrupt request (WFI), is representative of an instruction to execute a wait for receiving debug commands (BKPT), and is representative of an instruction for executing a copy in a register of an immediate value (LI);
- a fourth instructions format is representative of an instruction (LB) to execute a transfer of a byte of data from the central program memory or from the central volatile memory to a bank of internal registers and is representative of an instruction (PP) to execute multiple data transfer operations.

8. Instructions format according to claims 6 or 7, wherein the fifth field (opcode) is indicative of the type of arithmetic or logic operation selected from addition (ADD), subtraction (SUB), AND logic, OR logic, XOR logic, logic and arithmetic shift.

9. Instructions format according to any of claims 5 to 8, wherein the first field contains a second defined value ('1', '1', '0') indicative of a compressed arithmetic instruction (CA), the compressed arithmetic instruction comprising:
- a second field (op) composed of three bits (#3, #2, #1) indicative of a type of arithmetic operation selected from addition, subtraction, AND logic, OR logic, XOR logic, logic and arithmetic shift;
- a third field (rs) composed of three bits (#10, #9, #8) indicative of a source register (rs) to be used as input to the selected arithmetic operation;
- a fourth field (rd) composed of three bits (#14, #13, #12) indicative of a destination register (rd) for storing the result of the selected arithmetic operation;
- a fifth field (i[3], i[2], i[1], i[0]) composed of four bits (#15, #11, #4, #0) indicative of a constant value to be used as input for the selected arithmetic operation.

10. A Central Processing Unit (50) comprising a Fetch Unit (51), a Decoding Unit (52) connected to the Fetch Unit, a bank of internal registers (53) connected to the Decoding Unit, an Arithmetic Logic Unit (54) connected to the Decoding Unit and with the bank of internal registers and a Memory Interface Unit (55) connected to the Fetch Unit, to the Arithmetic Logic Unit and to the bank of internal registers,
wherein the Fetch Unit is configured to receive an instruction of a software program to be executed by means of the Central Processing Unit,
and wherein the Decoding Unit (52) is configured to decode a format of said instruction according to any one of claims 5 to 9.
